# EUROPEAN PATENT APPLICATION

(11) **EP 1 450 318 A2**
(43) Date of publication of application: **25.08.2004**
(21) Application number: 04002648.6
(22) Date of filing: 06.02.2004
(51) Int. Cl.: G07F 9/10, G07F 13/10

(54) **Automatic coin-operated machine for the production and on-demand dispensing of ice cream**

(30) Priority: 21.02.2003 IT ge20030014
(71) Applicant: ALI S.p.A. - CARPIGIANI GROUP, 40011 Anzola Emilia (Bologna) (IT)
(72) Inventor: Cocchi, Gino, 40100 Bologna (IT); Zaniboni, Gianni, 40044 Borgonuovo di Sasso Marconi (IT)
(74) Representative: Porsia, Dino, Dr.

(57) **Abstract**

Automatic machine operated by coins, tokens, push button or remote control, for the production and on-demand dispensing of portions of ice cream which can be customized with toppings selectable by the user, comprising a continuous ice cream machine (23) with a dispensing door (123) in a protected position inside a cabinet (17) in which are provided automatic manipulator means (A) which can move both horizontally and vertically and which, in response to a command and a selection made by the user, take an empty cup from suitable supply means (22), position it under the outlet of the ice cream dispenser (123) in a close position, lower it progressively in synchronization with the supply of ice cream by the said dispenser, in such a way that the ice cream is uniformly distributed and collected in the cup and finally has the characteristic pointed conical shape, provision being made to translate the cup, when the portion of ice cream has been collected, and if necessary to align it with means of supplying a customized topping selected by the user, and then to transfer it to a position where it can be picked up by the said user, preferably outside the said cabinet (17), by the automatic opening of a door (18) which subsequently recloses after the user has picked up the cup of ice cream and when the cup manipulation means have returned to the interior of the machine. (Fig. 4).

## Description

The present invention relates to an automatic machine operated by coins and/or tokens for the production and on-demand dispensing into cones, cups or other containers of ice cream which is produced instantly and which can be customized with toppings selectable by the user. There are currently known machines for dispensing portions of instantly produced ice cream. For example, there are known semi-automatic machines having the ice cream dispenser located visibly outside the machine itself, under which the user positions the cup or the cone before activating the ice cream supply. These machines are of highly simplified construction and pose problems of keeping the ice cream dispenser hygienically clean. With these machines, the collection of the supplied ice cream is dependent on the skill and attention of users, who are preferably adults, and it is impossible to supply ice creams which can be customized with syrups, chocolate chips and flakes or other toppings. There are also known automatic machines which can be operated even by non-adults, in which the ice cream dispenser is hygienically protected inside a cabinet closed by a door which can be opened by the user and which is usually made of transparent material. When commanded, means automatically position an empty cup on the base of the said cabinet, under the dispenser, which is then activated to supply the portion of ice cream which falls into the cup. At the end of the supply, means signal to the user that he should open the door and take the cup of ice cream out of the machine. These machines do not resolve the problem of the correct distribution of the ice cream in the cup, since the cup is in a fixed position remote from the dispenser, and, like the semi-automatic machines, they do not permit the customization of the supplied ice cream.

The invention is designed to overcome these and other drawbacks of the known art with an automatic machine in which the ice cream dispenser is in a protected position inside the machine and in which there are provided automatic manipulator means, which, in response to a command and a selection made by the user, take an empty cup from suitable supply means, position it under the ice cream dispenser, in a close position, lower it progressively in synchronization with the supply of ice cream by the said dispenser, in such a way that the ice cream is uniformly distributed in the cup and finally has the characteristic pointed shape. On completion of the supply of the portion of ice cream, with any required syrup supplied by means associated, for example, with the dispenser of the said ice cream, the cup is translated and if necessary aligned with means of supplying a customized topping selected by the user, and is then transferred to a position where it can be picked up by the said user, preferably outside the machine, with the automatic opening of a door which subsequently recloses after the user has picked up the cup of ice cream, while the cup manipulation means return to the initial position for the supply of another empty cup. The machine also automatically supplies a spatula for eating the ice cream. In a preferred embodiment of the invention, the said cup manipulation means comprise a vertical screw and female thread actuator driven by means with electronic speed and phase control. The arm of the bowl which supports the cup passes through a guide slot formed laterally and longitudinally in a fixed tube which coaxially encloses the female thread and screw of the actuator. The said slot has an upper rectilinear portion, to transmit to the arm bearing the bowl the necessary upward and downward movement to move the cup initially towards and subsequently away from the ice cream dispenser, and the said slot has a lower portion of helical shape for transmitting to the arm bearing the bowl the composite movement of further raising and lowering, but primarily of translation, for the stages of collecting the empty cup, aligning the cup with the ice cream dispenser and moving it away from it, and aligning the cup with any stations for customizing the ice cream or for supplying the spatula and for bringing the said cup of ice cream out of the machine.

These and other characteristics of the invention, and the advantages derived therefrom, will be made clearer by the following description of a preferred embodiment of the invention, illustrated purely by way of example and without restrictive intent in the figures of the four attached sheets of drawings, in which:
- Fig. 1 shows in a partly sectional side view the actuator used for moving the ice cream collection cup, illustrated here in the limit position of the upward movement of the said cup;
- Fig. 2 is a schematic view and circuit diagram of the machine with the actuator of Figure 1;
- Fig. 3 is a partly sectional plan view from above of the part of the machine which comprises the actuator of Figure 1, shown in different operating conditions;
- Figs. 4 and 5 show in perspective a possible industrial embodiment of the machine, shown in two different states of opening, to give a clearer view of the internal components.

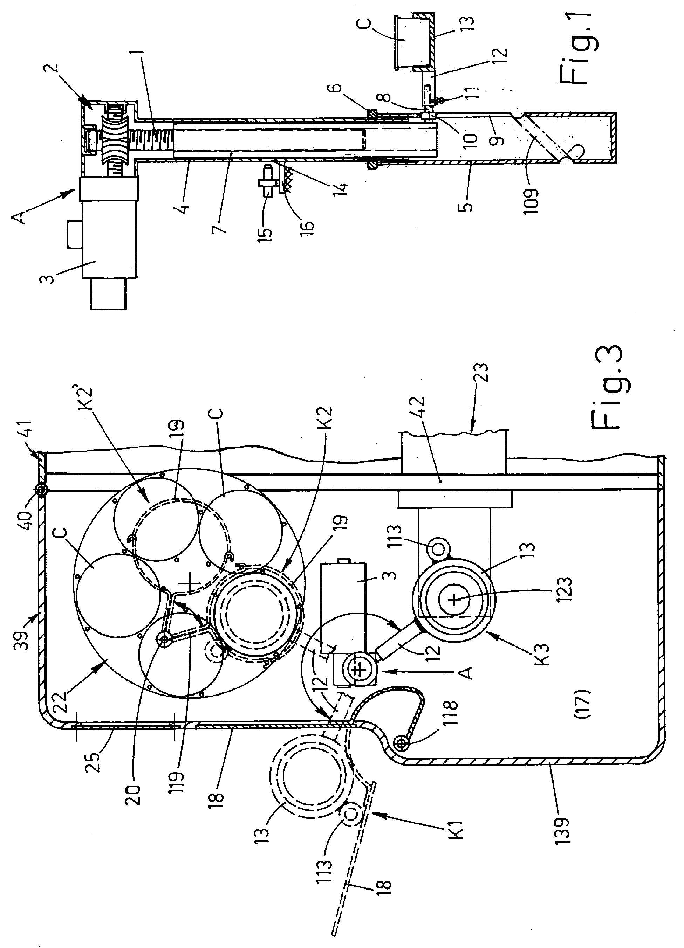

The actuator A shown in Figure 1 comprises a vertical screw 1 whose upper end is keyed to a means for support and controlled rotation in both directions, consisting for example of a reduction unit 2 of the type having a helical gear and endless screw, or of another irreversible type, driven by a reversible electric motor 3 of the type designed for electronic speed and phase control. The body of the reduction unit 2 is fixed to a tubular body 4 which coaxially encloses the screw 1 and whose lower and externally threaded end is screwed into the upper and internally threaded end of a cylindrical tube 5 which is locked in the desired position by means of a locknut 6. The screw 1 interacts with a female thread formed in one piece with or added and fixed to the interior of a tubular slider 7, which slides in a guided way in the body 4 and which in its uppermost position is sufficiently long to partly engage in an upper portion of the tube 5, and whose lower end is fixed to a perpendicular and radial appendage 8 which projects through a rectilinear guide slot 9 formed laterally and longitudinally in the said tube 5 and which interacts with the edges of this slot by means of a roller 10. An arm 12 which projects to support a bowl 13, positioned with its axis horizontal and capable of supporting a cup C to contain the portion of ice cream to be supplied by the machine, can be fixed without the possibility of rotation and irremovably, for example by means of a dowel 11 or other suitable means, to the appendage 8, which is provided with a flat or is characterized by a non-circular section. When, as a result of the rotation of the screw 1, the arm 12 reaches the lower end of the vertical rectilinear slot 9, the upper end of the slider 7 which supports the said arm passes beyond a lateral aperture 14 of the body 4, and this condition is detected by a sensor 15, of the proximity type for example, fixed on a support 16 which can also be used to support the actuator in question, together with other support means which operate, for example, at the position of the upper unit 2, 3. The sensor 15 is used to recognize a predetermined, preset position of the arm 12 which is constant in space, and to transfer this information to the phase control system which controls the motor 3, so that the said system can be aware of the precise position in any other point of space of the said arm 12 with the bowl 13.

The rectilinear slot 9 continues below with a helical portion 109, forming a path along which the arm 12 undergoes an angular displacement of the desired extent, for example approximately 210 degrees. Purely by way of example and without restrictive intent, in the machine produced by the applicant good results have been obtained with an actuator capable of imparting to the arm 12 a total vertical displacement of approximately 190-200 mm, with a travel of approximately 120 mm in its interaction with the rectilinear slot 9 and with a remaining travel of approximately 70-80 mm in its interaction with the helical portion of the slot 109. It should be understood that the aforesaid dimensions are stated purely by way of example and that they can be modified considerably according to the various requirements of construction of the machine.

The actuator as described can be varied in its construction in a number of ways which may make its operation more flexible, enabling it to be adapted by a purely electronic solution to the various requirements of application, with the need for mechanical modifications. The variation could consist in providing the tube 5 with a single longitudinal rectilinear slot 9, as long as the aforesaid portions 9, 109, and in mounting the said tube 5 on the body 4 not in a fixed way, but with the possibility of rotation about its axis, the said tube 5 being controlled by its own rotation unit similar to the upper unit 2, 3 which controls the screw 1, this rotation unit also being reversible and having electronic speed and phase control. Clearly, in this variant, the screw 1 provides the vertical movements of the arm 12, while the tube 5 provides the angular movements of the said arm, thus enabling these movements to be independent of the rotation of the said screw 1.

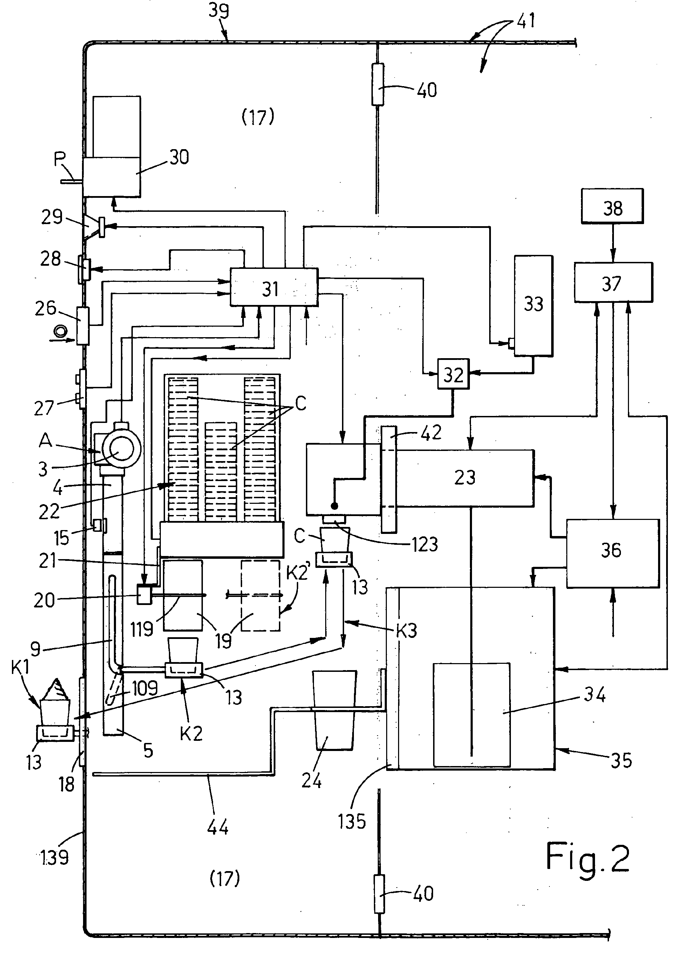

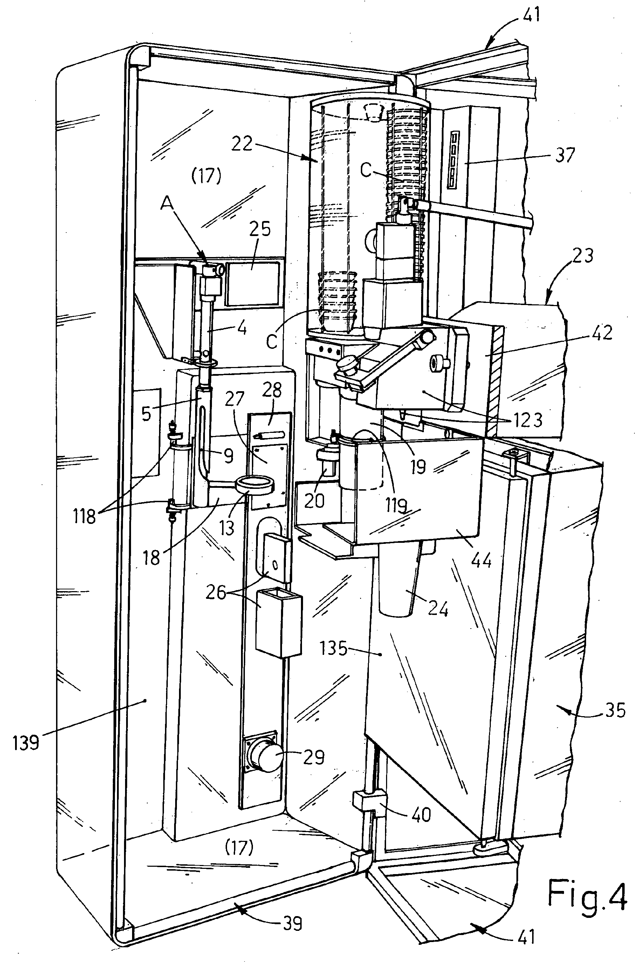

With reference to Figures 2 and 3, a description will now be given of the essential characteristics of the embodiment of an instant ice cream dispensing machine which uses the actuator A described above, which is located inside a chamber 17, next to a door 18, which for example is made of transparent material, hinged in the manner of a flap on vertical hinges 118 and positioned to close an aperture in the front face of this chamber 17, at a convenient height for both adults and non-adults. The door 18 opens towards the outside of the chamber 17 and is kept closed by elastic means, consisting for example of needle springs which act on the hinges 118. When the arm 12 of the actuator A is at its lower limit of travel, interacting with the lower end of the helical portion of slot 109, the bowl 13 projects from the chamber 17 and interacts with the door 18 by means of a fixed or rotatable rounded appendage 113, thus keeping the door open as shown in broken lines in the position K1 of Figure 3. On the other hand, when the arm 12 of the actuator A interacts with an intermediate portion of the helical portion 109 of the aforesaid guide slot, the door 18 is closed and the bowl 13 is in the position K2, inside the chamber 17, under a vertical tubular guide 19 (see also Fig. 2), supported by an arm 119 keyed to the vertical shaft of a rotary actuator 20 which in turn is fixed by means of a bracket 21 to the lower part of a carousel supply unit 22 of a known type, in which a plurality of vertical stacks of empty cups C can be stored, and which on command drops a cup which passes through the tube 19 and falls in a guided way into the underlying bowl 13. When the cup has been supplied, the actuator 20 moves the tubular guide 19 away from the bowl 13, placing it in the position indicated by K2' and keeping it temporarily in this position remote from the orbit of movement of the bowl 13, for reasons which are stated below.

When the arm 12 of the actuator A is at the lower end of the rectilinear slot 9, the empty cup C supported by the bowl 13 is in the position indicated by K3 in Figure 3 and is placed under and in vertical alignment with the outlet of the dispenser 123 of a continuous ice cream machine 23 for producing instant ice cream (Fig. 2). In the next stage, the arm 12 is made to rise along the rectilinear slot 9 of the actuator A to bring the cup C towards the dispenser 123 along a path of predetermined length, possibly in accordance with the height of the said cup. When the cup has been raised, the ice cream emerges from the dispenser 123 of the ice cream machine 23 and is collected by gravity in the cup C positioned near to it. At the correct time, the motor 3 of the actuator A reverses its rotation and lowers the cup along a programmed path which may include accelerations and/or decelerations, while at the correct time the dispenser 123 ceases to supply ice cream, in such a way that when the arm 12 reaches the end of the rectilinear slot 9 the ice cream is uniformly distributed in the cup and is shaped with a pointed upper part which is particularly appealing to consumers of ice cream. In the final part of this stage, any drops of ice cream which become detached from the dispenser 123 fall into the cup which can be made to remain stationary temporarily at the lower limit of travel.

In the next stage, the actuator A makes the arm 12 slide back along the helical slot 109, causing the bowl 13 to rise slightly and especially causing it to rotate about the longitudinal axis of the said actuator and to move in an anti-clockwise direction with respect to Figure 3, thus leaving the position of vertical alignment with the outlet of the dispenser 123 of the ice cream machine 23, under which a container 24 is positioned for collecting any drops of ice cream (Fig. 2). Figure 3 shows how, during the rotation in the anti-clockwise direction, the cup C containing the ice cream passes again through the previous position K2 of interaction with the empty cup supply carousel 22, and that if the carousel still had its guide 19 in the active position for transferring the empty cup this guide would interfere with the ice cream projecting from the full cup. In order to avoid this interference, the guide 19 is temporarily removed to the position of non-interference K2'. In its movement from the position K3 to the position K2, the bowl 13 carrying the cup full of ice cream can be stopped by the actuator A in intermediate positions, in alignment with operating stations which are not illustrated and which are used, for example, to set a spatula or small spoon in the ice cream, or to customize the said ice cream with toppings provided from a fixed menu or selectable by the user, as described below. Continuing in its rotation in the anti-clockwise direction with respect to Figure 3, the appendage 113 of the bowl 13 carrying the cup full of ice cream interferes with the door 18, and reaches the position K1 in which the door is open and the cup containing the ice cream is carried outside the chamber 17, to enable the said full cup to be picked up easily by the user. The appendage 113 also has the function of moving the door 18 away from the bowl 13, thus allowing the user's hand to grasp the cup safely without any interference with the said door.

Figure 2 shows that the following components are provided on the wall of the means forming the chamber 17, in addition to the door 18 and a window 25 of transparent material (Fig. 3) located at the height of the carousel 22 to allow the state of filling of this component to be checked visually: a token operation unit 26 or other suitable means of activating the machine; a selector 27 to enable the user to select the customization of the ice cream; a display 28 and a loudspeaker 29 which indicate to the user the various stages of operation of the machine, helping him to carry out the few necessary operations; and the outlet of a device 30 which cyclically supplies a spatula P for the consumption of the ice cream which has been supplied. All these components of the machine, including the actuator A, the actuator 20 of the guide 19, the carousel 22, and the means of discharging the ice cream machine 23, are controlled by a programmable process unit 31 which also controls the operation of the means of customizing the dispensed ice cream, for example an interface 32 which supplies the ice cream dispenser 123, in precise synchronization with the activation of this dispenser, with the syrup placed in a supply container 33.

The ice cream machine 23 automatically draws the pasteurized liquid mixture for forming the ice cream from a supply container 34 protected inside a small refrigeration compartment 35. The cold required for the operation of the compartment 35 and the ice cream 23 is supplied by one or more refrigeration units 36 controlled by a process unit 37 which can be controlled and programmed by means of the unit 38.

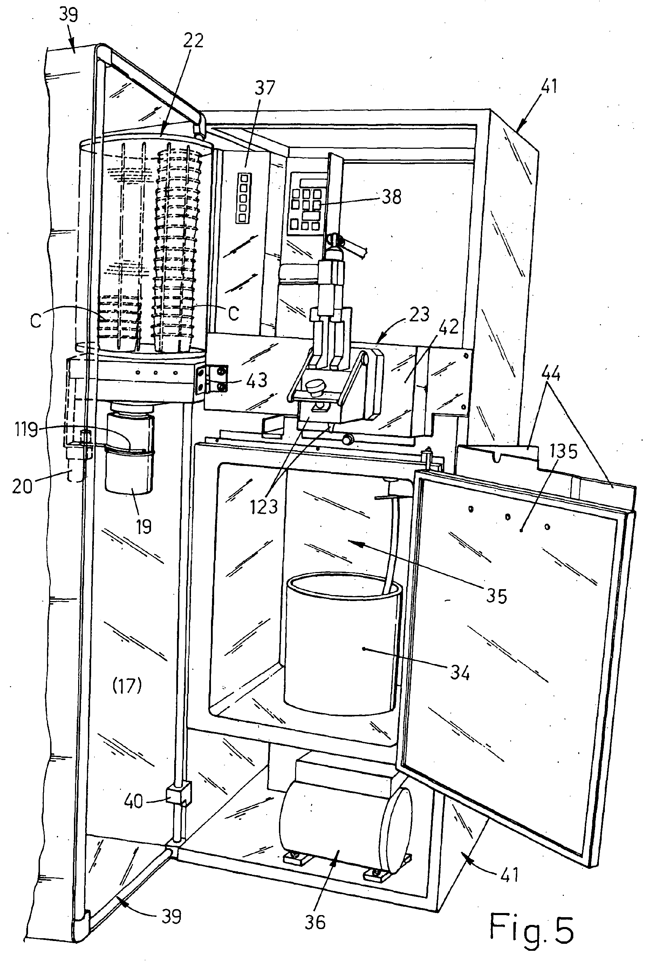

Figures 4 and 5 show further details of a machine according to the invention which can be produced on an industrial scale. The chamber 17 is formed inside a large door 39 pivoted in the form of a flap by hinges 40 on a parallelepipedal container 41 which is provided in its lower part and on its sides with ventilation slots which are not shown, which has its intermediate part occupied by the compartment 35, and which houses the refrigeration unit or units 36 and the ice cream machine 23 whose associated dispenser 123 projects into the aforesaid chamber 17 and is fixed on a cross-piece 42. The carousel 22 for supplying the empty cups is pivoted in the manner of a flap by the hinge 43 on this cross-piece, and, because the lower components 19 of this supply unit are located at the height of the door 135 of the compartment 35, the carousel 22 must first be moved away from the cross-piece 42, as shown in Figure 5, in order to open this door. On the door 135 there is fixed a large projecting protective casing 44 which supports the removable container 24 for collecting any drops of ice cream which may fall from the dispenser 123 and which is normally positioned under the orbit of movement of the bowl 13 carrying the cup, to collect any other drops of ice cream. In the present machine, the actuator A has been fixed on the inner face of the door 39 but it is to be understood that in a different embodiment the said actuator can be fixed on the cross-piece 42 or on any other part of the container 41, in such a way as to interact in a precise way with the dispenser 123 and with any stations for supplying products for customizing the supplied ice cream. This condition would therefore promote the interaction of the cup 13 with any means for the slow rotation of the cup during the stage of collection of the ice cream discharged from the dispenser 123, to provide a correct and more aesthetically pleasing distribution of the said ice cream in the said cup. In this variant, the cup 13 would be provided with a rotatable part which would support the cup C and would be rotated by any suitable means, for example by means of gearing with an idle trip wheel, which during the vertical travel of the said bowl interacts with a rack or other suitable fixed means which causes the desired rotation of the said cup by reaction.

It should be understood that the description refers to a preferred embodiment of the invention, which can be varied and modified in its construction in other ways than those mentioned above, without departure from the guiding principle of the invention as described above, as illustrated and as claimed below. In the claims, the references in brackets are provided purely for guidance and do not limit the scope of protection of the said claims.

Thus, for example, although reference is made both in the title and in the description to an automatic "coin-operated" machine, it is to be understood that this expression also means that the machine can be activated by tokens, or by a push button or by remote control.

## Claims

1. Automatic machine operated by coins, tokens, push button or remote control, for the production and on-demand dispensing of portions of ice cream which can be customized with toppings selectable by the user, comprising a continuous ice cream machine (23) having a dispensing door (123) in a protected position inside a chamber (17) in which are provided automatic manipulator means (A) which can move both horizontally and vertically and which, in response to a command and a selection made by the user, take an empty cup from suitable supply means (22), position it under the outlet of the ice cream dispenser (123) in a close position, lower it progressively in synchronization with the supply of ice cream by the said dispenser, in such a way that the ice cream is uniformly distributed and collected in the cup and finally has the characteristic pointed conical shape, provision being made to translate the cup, when the portion of ice cream has been collected, and if necessary to align it with means of supplying a customized topping selected by the user, and then to transfer it to a position where it can be picked up by the said user, preferably outside the said chamber (17), by the automatic opening of a door (18) which subsequently recloses after the user has picked up the cup of ice cream and when the cup manipulation means have returned to the interior of the machine.

2. Machine according to Claim 1), **characterized in that** the cup manipulation means comprise a bowl (13) with a vertical axis, which supports the said cup and which in turn is carried by a projecting arm (12) fixed to the slider equipped with a female thread (7) of a vertical rectilinear actuator (A), in which the said female thread interacts with a screw (1) driven by a reduction unit (2) with a motor (3) with electronic speed and phase control, to transmit the vertical movements to the said bowl, while the horizontal movements of the said bowl and the guidance of the vertical movements are provided by the interaction of the arm (12), or of parts associated therewith, with a guide slot formed laterally and longitudinally in a cylindrical tube (5) which coaxially encloses the said slider with the female thread (7).

3. Machine according to Claim 2), in which the tube (5) is fixed to the fixed tubular body (4) of the actuator (A), and the slot of the tube which guides the arm (12) of the bowl (13) supporting the cup in the vertical and horizontal movements comprises a rectilinear longitudinal portion (9), passage along which causes the said arm with the bowl (13) to move the cup (C) in the requisite way, initially towards and subsequently away from the ice cream dispenser (123), the said rectilinear slot being followed below by a helical portion of slot (109) to transmit to the cup support means the composite movement of raising, lowering, and principally rotation or translation about the vertical axis of the actuator, for the stages of picking up the empty cup, aligning the cup with the ice cream dispenser and removing it therefrom, aligning the cup with any stations for customizing the said ice cream and/or for supplying a spatula, and for discharging the said cup containing the ice cream to the outside of the machine.

4. Machine according to Claim 3), in which the actuator (A) comprises a vertical screw (1) whose upper end is fixed to a means for support and for controlled rotation in both directions, consisting of a reduction unit (2) of the helical gear and endless screw type or of another irreversible type, driven by a reversible electric motor (3) of the type suitable for electronic speed and phase control, the body of the said reduction unit (2) being fixed to a tubular body (4) which coaxially encloses the screw (1) and whose lower and externally threaded end is screwed into the upper and internally threaded end of the tube (5) which is locked in the desired position by means of a locknut (6) and which carries the said composite slot (9, 109) for guiding the arm (12) with the bowl (13) supporting the cup in the various movements required by the operating cycle of the machine, the said screw being made to interact with a female thread formed in one piece with, or applied and fixed inside, a tubular slider (7), which slides in a guided way in the said body (4) and which in its position of maximum elevation is long enough to partly engage with an upper portion of the said tube (5), and whose lower end is fixed to a perpendicular appendage (8) which projects through the said guide slot (9, 109) and which interacts with the edges of this slot by means of a roller (10), the arm (12) holding the bowl (13) to support the cup (C) for containing the portion of ice cream supplied by the dispenser (123) of the machine being fixed irremovably on this appendage (8) by suitable means (11) and with a locking arrangement.

5. Machine according to Claim 4), **characterized in that** when, as a result of the rotation of the screw (1), the arm (12) reaches a predetermined position, for example at the lower end of the vertical rectilinear slot (9), the upper end of the tubular slider with the female thread (7) which supports the said arm extends beyond a lateral aperture (14) in the body (4) and this condition is detected by a sensor (15), of the proximity type for example, which is used to recognize a predetermined preset point of the arm (12) which is constant in space and to transfer this information to the phase control system which controls the motor (3) of the actuator (A), so that the system can know the precise position in any other point in space of the said arm (12) with its bowl (13).

6. Machine according to Claim 2), in which the tube (5) can have a single rectilinear longitudinal slot (9) and the said tube can be fitted on the overlying fixed tubular body (4), and can be rotated about its own axis by part of its own rotation system which is similar to the upper system (2, 3) controlling the screw (1) of the actuator (A), and which is also reversible and has electronic speed and phase control, the whole being arranged in such a way that the screw (1) produces the vertical movements of the arm (12) carrying the cup support bowl, while the tube (5), by its rotation, produces the angular and horizontal movements of the said arm, which may or may not take place simultaneously with the rotation of the said screw 1.

7. Machine according to any one or more of the preceding claims, in which, the bowl (13) supporting the cup (C) for collecting the ice cream is moved to the maximum distance from the ice cream dispenser (123) by interaction with a door (18) which normally closes an aperture of the chamber (17) containing the said dispenser and by opening the said door in opposition to the elastic means which tend to close it, the whole being arranged in such a way that the cup containing the ice cream is placed in a visible and convenient position for collection by the user.

8. Machine according to Claim 7), in which the cup support bowl (13) is provided laterally with a fixed or rotatable appendage (113), which interacts with the said door (18) in the opening stage, for the additional purpose of keeping it away from the bowl and enabling the user to achieve a distributed and safe grip on the cup of ice cream positioned in the said bowl.

9. Machine according to any one or more of the preceding claims, in which the means (22) for supplying an empty cup to the bowl (13) of the actuator (A) comprise a vertical carousel dispenser in which the cups are placed in a plurality of vertical stacks which are aligned, by a rotary movement of the said carousel, with individualized dispensing means under which is positioned a vertical tubular guide (19) which accompanies the empty cup in its fall into the underlying collection bowl (13), the said guide (19) being fixed by means of an arm (119) to a vertical rotary actuator (20) fixed, for example, by means of a support (21) to the carousel (22) in question, means being provided to ensure that, on completion of the transfer of an empty cup to the bowl, the guide (19) is temporarily removed from the bowl until the latter has completed the whole machine operating cycle, in such a way as to prevent subsequent interference of the said guide (19) with the ice cream which projects from the cup when it is discharged from the machine and carried outside to the user.

10. Machine according to any one or more of the preceding claims, **characterized in that** the following components are provided on the wall of the means forming the chamber (17) containing the various operating components, in addition to the ice cream outlet door (18) and an optional window (25) of transparent material located at the height of the empty cup supply carousel (22) to allow the state of filling of this component to be checked visually: a token operation unit (26) or other suitable means of activating the machine; an optional selector (27) to enable the user to select the customization of the ice cream; a display (28) and/or a loudspeaker (29) which indicate to the user the various stages of operation of the machine, helping him to carry out the few necessary operations; and the outlet of a device (30) which cyclically supplies a spatula (P) for the consumption of the ice cream which has been supplied, all these components of the machine, including the actuator (A), the actuator (20) of the guide (19) serving the empty cup supply carousel (22), the carousel (22) itself, and the ice cream dispenser (123), are controlled by a programmable process unit (31) which also controls the operation of the means for customizing the dispensed ice cream.

11. Machine according to Claim 10), in which the means for customizing the dispensed ice cream comprise, for example, an interface (32) which, under the control of the process unit (31), supplies syrup drawn from a container (33) to the dispenser (123) of the ice cream machine (23), in synchronization with the activation of this dispenser.

12. Machine according to any one or more of the preceding claims, in which the continuous ice cream machine (23) automatically draws the pasteurised liquid mixture for forming the ice cream from a supply container (34) which is hygienically protected inside a small refrigerated compartment (35), the cold required for the operation of this compartment and the ice cream machine (23) being supplied by one or more refrigeration units (36) controlled by a process unit (37) with a corresponding control and programming unit (38).

13. Machine according to any one or more of the preceding claims, in which the chamber (17) which contains the principal operating elements (A, 22, 123) of the said machine is formed inside a large door (39) pivoted in the manner of a flap with hinges (40) on a parallelepipedal container (41) which is provided in its lower part and on its sides with ventilation slots which are not shown, has its intermediate area occupied by the compartment (35) holding the container (34) of the liquid mixture supplied to the continuous ice cream machine (23), and houses the refrigeration unit or units (36) and the said ice cream machine (23) whose dispenser (123) projects into the said chamber (17) and is fixed on a cross-piece (42) on which the empty cup supply carousel (22) is pivoted in the manner of a flap with a vertical hinge (43), in the case in which the lower components (19) of this carousel (22) are located at the height of the door (135) of the said compartment (35), so that in order to open this door it is first necessary to move the carousel (22) away from the corresponding supporting cross-piece (42).

14. Machine according to any one or more of the preceding claims, in which, on the door (135) of the refrigeration compartment which houses the container (34) holding the mixture to be supplied to the continuous ice cream machine (23), there is fixed a large projecting protective casing (44) which supports a removable container (24) for collecting any drops of ice cream falling from the dispenser (123) of the ice cream machine, and which is positioned under the orbit of movement of the cup support bowl (13), to collect any other drops of ice cream.

15. Machine according to Claim 13), in which the actuator (A) is fixed on the inner face of the said door (39).

16. Machine according to Claim 13), in which the actuator (A) is fixed on the cross-piece (42) or on any other part of the container (41) which supports the continuous ice cream machine (23).

17. Machine according to any one or more of the preceding claims, in which the bowl (13) supporting the cup (C) for collecting the ice cream can be provided with means which make the said cup rotate automatically and slowly in the stage of collecting the ice cream supplied by the ice cream dispenser (123).

18. Machine according to Claim 17), in which the bowl (13) has a rotatable part which supports the cup (C) and which can be rotated by any suitable means, for example by means of gearing with an optional interposed idle trip wheel, which during the vertical travel of the said bowl interacts with a rack or other suitable fixed means in such a way as to cause, by reaction, the desired rotation of the said bowl and of the cup located thereon during the collection of the ice cream supplied by the dispenser (123).

19. Automatic machine for dispensing into cups or other containers portions of instantly produced ice cream which can be customized with optional toppings selectable by the user, made particularly, wholly or substantially, as described, as illustrated on the four attached sheets of drawings, and for the purposes stated above.
